Europäisches Patentamt

**European Patent Office**

**Office européen des brevets**

(11) Numéro de publication: **0 150 151**
**B1**

(12) # FASCICULE DE BREVET EUROPÉEN

(45) Date de publication du fascicule du brevet:
20.07.88

(51) Int. Cl.⁴: **G 21 C 5/10, G 21 C 1/02**

(21) Numéro de dépôt: **85400071.8**

(22) Date de dépôt: **16.01.85**

(54) Dispositif de supportage et d'alimentation en réfrigérant d'un coeur de réacteur nucléaire refroidi par un métal liquide.

(30) Priorité: **24.01.84 FR 8401048**

(43) Date de publication de la demande:
**31.07.85 Bulletin 85/31**

(45) Mention de la délivrance du brevet:
**20.07.88 Bulletin 88/29**

(84) Etats contractants désignés:
**BE DE FR GB IT**

(56) Documents cité:
**FR-A-1 445 878**
**FR-A-2 179 840**
**FR-A-2 180 517**
**FR-A-2 246 941**
**FR-A-2 276 663**
**FR-A-2 461 335**
**FR-A-2 461 336**
**US-A-4 053 359**
**US-A-4 367 194**

**PROCEEDINGS OF THE L.M.F.B.R. SAFETY TOPICAL MEETING, 19-23 juillet 1982, vol. 1, pages I-475 à I-491, Lyon - Ecully, FR; J.A.G. HOLMES: "The role of structural integrity in liquid metal fast breeder reactor safety"**

(73) Titulaire: **COMMISSARIAT A L'ENERGIE ATOMIQUE, 31/33, rue de la Fédération, F-75015 Paris (FR)**
Titulaire: **ELECTRICITE DE FRANCE Service National, 2, rue Louis Murat, F-75008 Paris (FR)**

(72) Inventeur: **Artaud, Robert, 9, Avenue Claude Debussy, F-13100 Aix en Provence (FR)**
Inventeur: **Jogand, Patrick, La Biadouire, F-84240 La Tour d'Aigues (FR)**
Inventeur: **Peturaud, Pierre, 2, rue Nostradamus, F-13100 Aix en Provence (FR)**

(74) Mandataire: **Mongrédien, André, c/o BREVATOME 25, rue de Ponthieu, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention se rapporte au domaine des réacteurs nucléaires refroidis par métal liquide et notamment du type à neutrons rapides et surgénérateurs.

On sait que dans de tels réacteurs intégrés, comme par exemple le réacteur français SUPERPHENIX de Creys Malville, une cuve métallique contient à la fois le coeur proprement dit, composé des assemblages renfermant des matières fertile et fissile, entouré de sa protection neutronique latérale, ainsi que les pompes et les échangeurs primaires destinés à mettre le métal liquide, généralement du sodium, en mouvement dans la cuve et au travers du coeur et à en extraire les calories provenant de la réaction en chaîne. Dans des réacteurs de ce type, le coeur, situé à la partie centrale inférieure de la cuve, repose sur un bloc support.

Pour réaliser le bloc support d'un tel coeur de réacteur nucléaire, on utilise généralement un platelage rigide fixé sur la cuve principale de l'enceinte du réacteur, ce platelage étant une structure résistante composée de tôles soudées, ayant la forme d'un disque et fixée par sa périphérie à la cuve principale. Sur ce platelage repose le coeur du réacteur, par l'intermédiaire d'un sommier, lequel sommier est une structure mécanique de forme cylindrique ; le sommier s'appuie sur le platelage en de nombreux points uniformément répartis sur toute sa surface. Le rôle essentiel du sommier est de maintenir les assemblages dans des positions fixes et parfaitement déterminées ainsi que de recevoir le sodium sous pression refoulé par les pompes primaires pour le répartir dans les assemblages qui peuvent présenter un pied d'alimentation et de maintien du type de celui qui est décrit dans le brevet français FR-A-2 316 703 au nom du Commissariat à l'Energie Atomique, ou un pied d'alimentation et de maintien du type de celui qui est décrit dans le brevet français FR-A-2 030 392 au nom de L'United States Atomic Energy Commission.

On a également cherché à perfectionner cette structure d'un type connu de manière à la rendre démontable. Les brevets français FR-A- 2 180 517 et FR-A-2 246 941 décrivent de tels perfectionnements qui se sont révélés, à l'usage, posséder certains inconvénients, notamment d'ordre économique, c'est-à-dire conduisant à des coûts de fabrication relativement élevés. Par ailleurs, la masse importante de tôlerie que suppose l'existence simultanée du platelage inférieur et du sommier superposé conduisent à un encombrement en hauteur important et à un poids également assez élevé de la structure de support qui pénalise ainsi d'autant la cuve principale, laquelle doit être conçue pour être capable de supporter ce poids.

Dans des réalisations connues, et décrites notamment dans les brevets US-A-4 367 194 et FR-A-2 179 840 on a préconisé, pour l'introduction du métal liquide "froid" à haute pression dans les éléments combustibles qu' il parcourt en s'écoulant verticalement de bas en haut, de placer, sous la plaque de fixation des éléments, un récipient collecteur dans lequel le métal liquide à haute pression est envoyé par les pompes primaires, avant de parcourir le coeur du réacteur. Dans un cas comme dans l'autre, une structure spéciale, du type sommier dans le document US-A-4 367 194 et constituée par deux brides à vis dans le document FR-A-2 179 840, possédant un encombrement important dans le sens vertical, est nécessaire pour reporter, sur le fond de la cuve le poids de ce récipient collecteur.

La présente invention a pour objet un dispositif de supportage et d'alimentation en réfrigérant d'un coeur de réacteur nucléaire refroidi par métal liquide qui remédie aux inconvénients précédents en remplaçant le sommier et le platelage qui le supporte par une structure d'une seule pièce allégée en dimensions verticales et en poids, et d'un coût de fabrication notablement inférieur à celui des structures existantes.

Ce dispositif de supportage et d'alimentation en réfrigérant d'un coeur de réacteur nucléaire refroidi par un métal liquide, comprenant dans une cuve de confinement remplie de métal liquide, les assemblages du coeur et les assemblages de la protection neutronique latérale (P.N.L) dont les pieds sont emboîtés sur des pièces porteuses mâles fixées sur la face supérieure d'une plaque en regard des orifices d'alimentation en métal liquide, perforés dans la plaque, ainsi que des pompes primaires et des échangeurs intégrés dans la cuve et permettant la mise en pression, la circulation et le refroidissement de ce métal liquide, une cuve d'amenée du métal liquide à haute pression, située sous la plaque et constituée par un fond en anse de panier et par une virole cylindrique soudée à la plaque, cette cuve recevant le métal liquide à haute pression des tuyauteries de sortie des pompes primaires, qui traversent la virole cylindrique, et le distribuant aux assemblages du coeur à travers les orifices de la plaque se caractérise en ce qu'il comporte, au-dessous de la plaque :

- deux réseaux de raidisseurs soudés à la plaque, formant grille en nid d'abeille, ladite virole étant soudée à la plaque, au droit de la couronne interne de la P.N.L., aux lames verticales périphériques d'un premier réseau central de raidisseurs ;

- un caisson annulaire soudé à la virole de la cuve et à la plaque directement et par l'intermédiaire d'un second réseau annulaire de raidisseurs, formant ainsi avec la cuve et la plaque un ensemble d'une seule pièce très rigide, le caisson qui est supporté par une virole cylindrique fixée à la cuve de confinement recevant le métal liquide basse pression par l'intermédiaire d'un système déprimogène en communication avec le métal liquide haute pression de la cuve, et le distribuant aux assemblages de la P.N.L., à travers les orifices de la plaque.

Dans une première variante, ce système déprimogène, qui en fait est un dispositif créant une perte de charge sur le circuit de métal liquide, est placé sur la virole séparant la cuve haute pression du caisson annulaire.

Selon une deuxième variante, ce dispositif déprimogène est placé sur la liaison glissante reliant la tuyauterie de pompe primaire et la virole de la cuve haute pression.

Selon une troisième variante, ce système déprimogène est placé sur des assemblages spéciaux remplaçant certains assemblages et conçus pour être manutentionnables à distance.

Les différents systèmes déprimogènes assurent ainsi la circulation du métal liquide à basse pression dans le caisson annulaire en liaison avec la circulation du métal liquide à haute pression dans la cuve principale.

Enfin, la tuyauterie de pompe primaire apportant le métal liquide sous haute pression à l'intérieur de la cuve haute pression alimentant le coeur du réacteur peut être montée, selon l'invention, au moins de deux façons différentes.

Dans un premier mode de mise en oeuvre du dispositif de supportage selon l'invention, la tuyauterie de pompe primaire est soudée à la virole conique du caisson annulaire au niveau de la traversée de celle-ci et montée coulissante sur la virole de la cuve haute pression.

Selon un deuxième mode de mise en oeuvre du dispositif de supportage objet de l'invention, la tuyauterie de pompe primaire est soudée à la virole de la cuve haute pression et montée coulissante, par un système à soufflet, lors de sa traversée du caisson annulaire, ladite tubulure étant alors supportée par deux patins latéraux rigides solidaires d'une assise liée à la plaque supérieure.

Le dispositif de supportage objet de l'invention amène un certain nombre d'avantages par rapport aux solutions réalisées ou envisagées jusqu'à ce jour, et notamment les suivants :

- un gain de poids important par rapport à la solution classique de sommier posé sur platelage avec une seule zone de pression ;

- un gain sur la hauteur du bloc réacteur ;

- l'alimentation des assemblages en stockage interne par une zone à basse pression ;

- une meilleure conception hydraulique du sommier : bonne répartition des débits, pertes de charge réduites, possibilité de diminuer le nombre de tuyauteries en augmentant leur diamètre ;

- un plus faible diamètre de l'ensemble par rapport au système sommier-platelage permettant sa fabrication en usine.

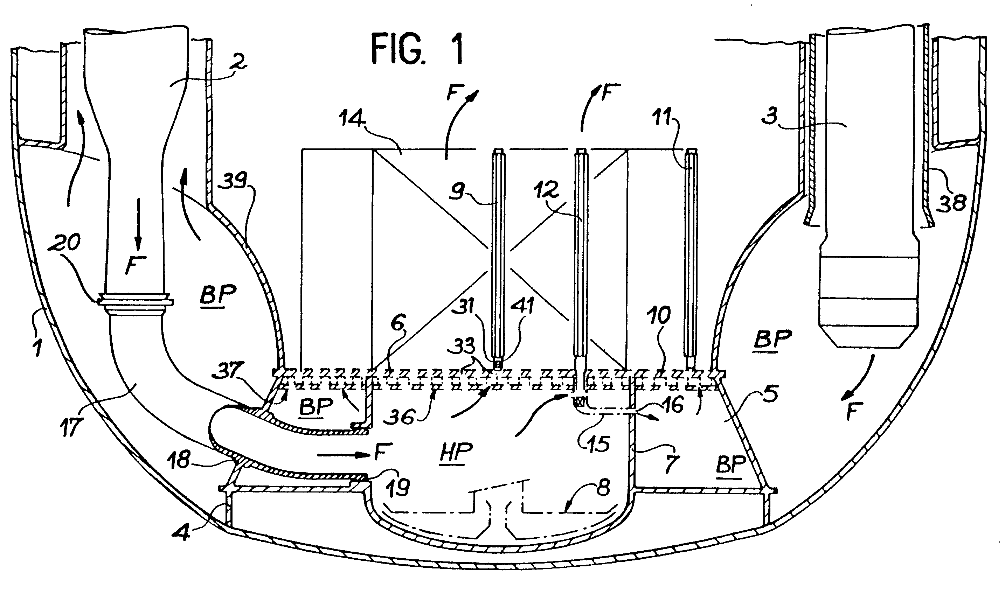

De toute façon l'invention sera mieux comprise en se référant à la description qui suit de plusieurs modes de mise en oeuvre du dispositif de supportage et d'alimentation en réfrigérant objet de l'invention, description qui sera faite à titre surtout illustratif et non limitatif en se référant aux figures 1 à 4 ci-jointes sur lesquelles:

- la figure 1 représente, en coupe diamétrale selon l'axe d'un réacteur nucléaire du type à neutrons rapides et refroidi par métal liquide, la partie inférieure de la cuve de confinement de ce métal équipée du dispositif de supportage objet de l'invention ;

- la figure 2 représente en coupe selon le même plan que la figure 1, une variante de fixation de la conduite de pompe primaire sur la cuve haute pression dans laquelle cette conduite est soudée sur cette cuve ;

- la figure 3 représente, en section selon le plan horizontal AA et vu de dessus, le dispositif d'accrochage de la tubulure de raccordement à la pompe primaire ;

- la figure 4 représente à plus grande échelle le détail d'implantation d'un assemblage spécial muni d'un dispositif déprimogène aux lieu et place d'un assemblage combustible ordinaire ;

- la figure 5 représente le détail d'implantation d'un dispositif déprimogène dans la virole cylindrique de la cuve haute pression, et l'emboîtement d'un pied d'assemblage sur sa pièce porteuse ;

- la figure 6 représente le détail d'une liaison à contact libre à labyrinthe ou à segments, entre la cuve haute pression et une tuyauterie de sortie de pompe.

Sur la figure 1, on voit en coupe la cuve 1 d'un réacteur nucléaire du type à neutrons rapides refroidi par sodium liquide. Dans l'enceinte de la cuve 1, et à la périphérie de celle-ci, se trouve implantée de façon connue sur la périphérie du réacteur une série de pompes 2 et d'échangeurs placés dans des cheminées 38 qui traversent le redan 39 de séparation sodium chaud-sodium froid. Conformément à l'invention, et s'appuyant sur le fond de la cuve de confinement 1 par l'intermédiaire d'une virole cylindrique 4, un caisson annulaire 5 supporte, d'une part, une plaque supérieure 6, perforée et consolidée en flexion par deux réseaux de raidisseurs en nid d'abeille : un réseau central 36 et un réseau annulaire 37 et, d'autre part, une cuve haute pression 7 constituée par une virole cylindrique et par un fond en anse de panier. Cette virole est soudée à la plaque supérieure, au droit de la P.N.L., et aux deux réseaux de raidisseurs. A la partie inférieure de la cuve 7 est disposé un récupérateur 8 destiné à recueillir des éléments du coeur qui auraient fondu lors d'un éventuel accident grave de fonctionnement du réacteur.

Au-dessus et en regard des orifices 33 de la plaque 6, sont implantés les pièces porteuses des différents assemblages dont l'un deux, référencé 9, a été représenté seul sur la figure 1 pour raison de simplicité. Sur la zone annulaire latérale 10 de la plaque 6 sont situés des éléments de protection neutronique latérale, dont un seul, 11, a été représenté sur la figure 1. Ces éléments 11 entourent le coeur de façon connue et servent à absorber les neutrons qui auraient tendance à s'échapper vers l'extérieur.

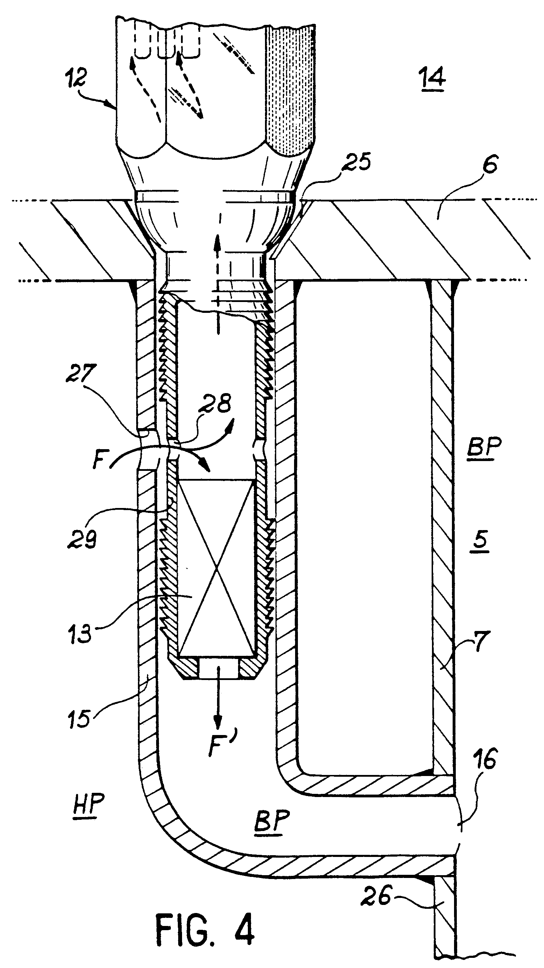

Parmi les assemblages implantés dans les orifices de la plaque supérieure 6, un certain nombre d'entre eux, tels que l'assemblage 12 sur la figure 1, sont des assemblages spéciaux qui ne comportent pas de combustible mais dont le rôle est essentiellement de mettre en communication au travers d'un dispositif déprimogène ou de perte de charge 13 en soi connu, la cuve 7 où le sodium liquide est à haute pression sous l'effet des pompes primaires 2 et le caisson annulaire 5 où le sodium est à basse pression. A cet effet, une canalisation 15 relie l'extrémité inférieure du dispositif déprimogène 13 avec l'intérieur du caisson annulaire 5 par l'intermédiaire d'un orifice 16 percé dans la virole cylindrique latérale de la cuve haute pression 7. Cet assemblage spécial et ses différentes connexions seront décrits plus en détail ultérieurement en se référant à la figure 4 qui le montre à plus grande échelle.

Un certain nombre de flèches F montrent la direction d'écoulement du métal liquide dans le système et les différentes indications BP et HP désignent respectivement à l'intérieur de la cuve 1, les zones où le sodium liquide est soit à basse pression soit à haute pression sous l'effet de la pompe primaire 2.

Le fonctionnement du dispositif de supportage objet de l'invention nécessite bien entendu que chacune des pompes primaires 2 soit reliée par une tuyauterie 17 à l'entrée de la cuve à haute pression 7. Cette tuyauterie 17 peut être raccordée selon l'invention de deux façons différentes à cette cuve 7, étant entendu que de toute façon le mode de liaison choisi doit permettre les débattements angulaires et les translations provoquées par les variations de température du sodium liquide lors du démarrage du réacteur et en cours de fonctionnement de celui-ci.

Une première solution de fixation de cette tuyauterie 17 sur la cuve 7 est représentée sur la figure 1. Dans cette réalisation, la canalisation 17 est soudée en 18 sur le caisson annulaire 5 et débouche dans la cuve à haute pression 7 par une traversée coulissante 19 de sa paroi cylindrique. Dans ce cas, c'est la tubulure 17 qui supporte toutes les charges telles que la poussée de la pompe 2 en fonctionnement, la déflexion de jet du sodium et la réaction de la pompe aux séismes éventuels. Cette tuyauterie 7 est également liée à la pompe 2 par la jonction 20 qui peut être coulissante. La liaison 19 à contact libre et coulissant, tel qu'un système à labyrinthe ou à segments laisse passer un certain débit de fuite de la cuve 7 haute pression vers le caisson 5 basse pression et constitue de ce fait un dispositif déprimogène.

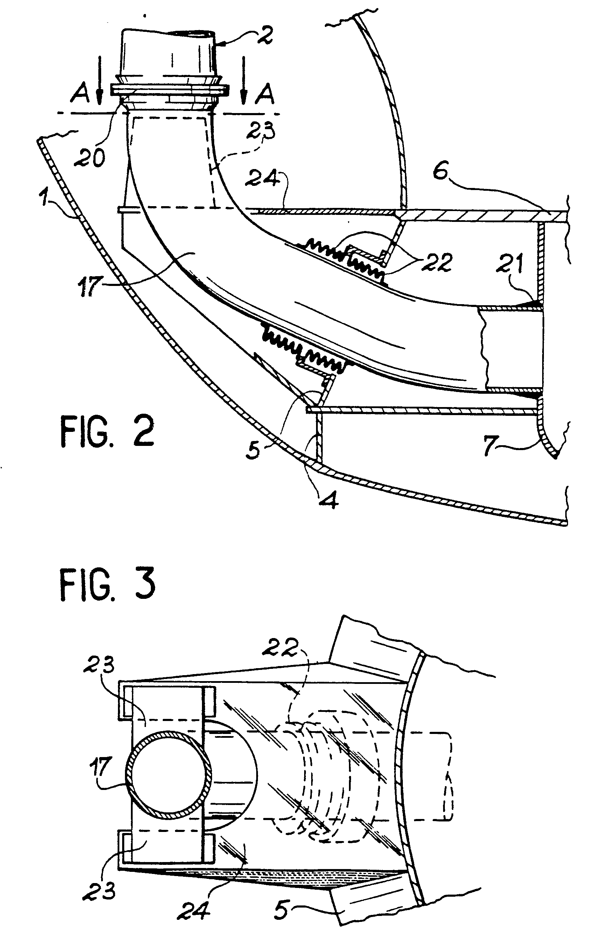

Selon l'invention, une deuxième solution de fixation de cette tubulure 17 sur la cuve 7 est représentée sur les figures 2 et 3 où l'on voit que cette tubulure 17 est soudée sur la cuve à haute pression 7 en 21 à son entrée dans celle-ci. Dans ce mode de mise en oeuvre, la tuyauterie 17 passe à travers le caisson annulaire 5 par l'intermédiaire d'un soufflet d'étanchéité 22 qui permet son libre déplacement en translation au travers de cette paroi 5. La tubulure 17 elle-même est supportée par deux structures latérales rigides ou patins 23 visibles sur la figure 3, solidaires d'une assise 24 liée à la plaque supérieure 6 de la structure support.

Dans tous les modes de réalisation conformes à l'invention, la cuve à haute pression 7 sert de plenum de distribution du sodium à haute pression dans le coeur 14 et l'on peut supprimer la sphère de pompe ainsi que la présence de deux tubulures de distribution du sodium par pompe primaire, étant donné que la hauteur de la virole cylindrique de la cuve 7 et la place disponible à travers le caisson 5 permettent d'y implanter des tuyauteries 17 de plus grand diamètre. Dans des réalisations conformes à l'invention, on utilise pour la tuyauterie 17 un coude de l'ordre d'un mètre de diamètre relié à la pompe 2 par une liaison glissante 20.

Sur la figure 4, on a représenté, à plus grande échelle, l'assemblage spécial 12 de la figure 1 implanté dans un orifice 25 de la plaque supérieure 6. Le pied de cet assemblage spécial 12 est introduit dans une canalisation 15 qui relie au travers de l'orifice 25 la zone à haute pression de la cuve 7 à la zone basse pression du caisson annulaire 5 par l'intermédiaire de l'orifice 16 percé dans la paroi verticale 26 de la cuve 7. Dans la paroi de la canalisation 15 est percé un orifice 27 débouchant dans la zone à haute pression de la cuve 7 et correspondant à un orifice 28 dans le pied de l'assemblage spécial 12, l'ensemble des deux orifices 27 et 28 permettant au sodium à haute pression de la cuve 7 de pénétrer selon la flèche F à l'intérieur du pied 29 de l'assemblage 12 d'où une fraction peut, en traversant le système déprimogène 13, s'écouler ensuite selon la flèche F' vers la zone à basse pression du caisson annulaire 5.

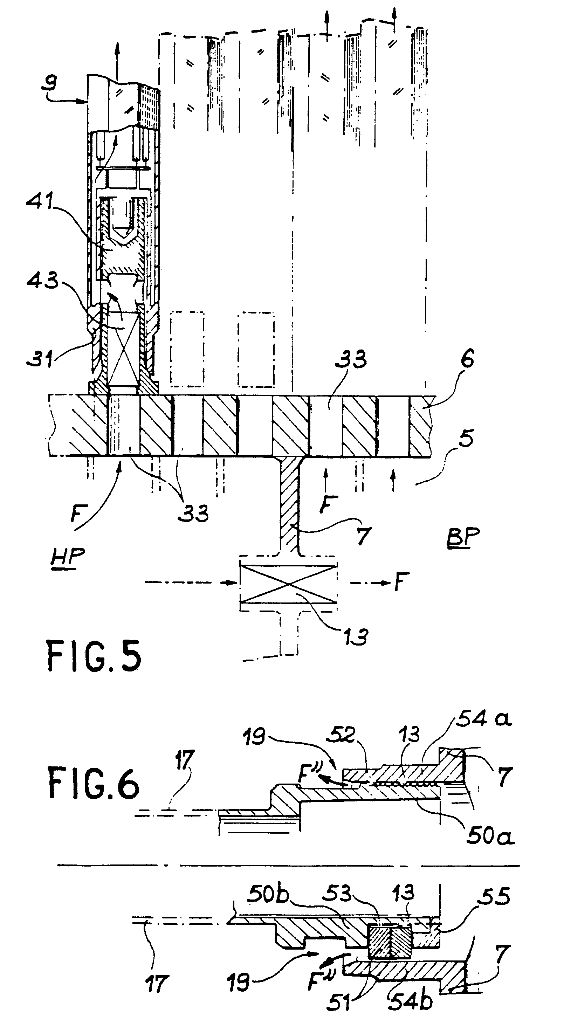

Sur la figure 5 on a représenté l'implantation d'un dispositif déprimogène 13 dans la virole cylindrique de la cuve 7. Ce dispositif déprimogène assure, à partir du métal liquide haute pression de la cuve 7, l'alimentation du caisson 5 en métal liquide basse pression qui est distribué aux assemblages de la P.N.L placés en périphérie de la plaque 6, au-dessus du caisson 5 en regard des orifices 33.

On a illustré sur cette même figure, l'emboîtement du pied 31 d'un assemblage 9 du coeur sur la pièce porteuse mâle 41 fixée sur la plaque 6 en regard des orifices 33. Chaque pièce porteuse est équipée de façon connue d'un dispositif déprimogène 43 permettant le réglage du débit du métal liquide à travers l'assemblage 9.

Les figures 6a et 6b représentent, à grande échelle, deux modes de réalisation d'une liaison coulissante 19 à contact libre :
- dans un premier mode de réalisation, l'extrémité 50a de la tuyauterie 17 présente sur la surface extérieure une série de gorges 52 formant avec le manchon 54a soudé sur la virole cylindrique de la cuve 7 et dans lequel elle s'emboîte, une liaison coulissante à labyrinthe,
- dans un deuxième mode de réalisation, l'extrémité 50b de la tuyauterie 17 présente sur la surface extérieure une gorge 53 dans laquelle est logé au moins un segment 51, maintenu en place par une butée 55, formant avec le manchon 54b une liaison coulissante à segments.

Ces liaisons autorisent un débit de fuite, représenté par les flèches F'', qui alimente le caisson annulaire 5 en métal liquide à basse pression et qui joue le rôle, dans ce cas particulier, du dispositif déprimogène 13.

## Revendications

1. Dispositif de supportage et d'alimentation en réfrigérant d'un coeur (14) de réacteur nucléaire refroidi par un métal liquide, comprenant dans une cuve de confinement (1) remplie de métal liquide, les assemblages (9) du coeur et les assemblages (11) de la protection neutronique latérale (P.N.L.) dont les pieds (31) sont emboîtés sur des pièces porteuses mâles (41) fixées sur la face supérieure d'une plaque (6) en regard des orifices (33) d'alimentation en métal liquide, perforés dans la plaque (6), ainsi que des pompes primaires (2) et des échangeurs (3) intégrés dans la cuve (1) et permettant la mise en pression, la circulation et le refroidissement de ce métal liquide, une cuve (7) d'amenée du métal liquide à haute pression, située sous la plaque (6) et constituée par un fond en anse de panier et par une virole cylindrique soudée à la plaque (6), cette cuve recevant le métal liquide à haute pression des tuyauteries (17) de sortie des pompes primaires, qui traversent la virole cylindrique, et le distribuant aux assemblages (9) du coeur à travers les orifices (33) de la plaque (6); caractérisé en ce qu'il comporte, au-dessous de la plaque (6) :

- deux réseaux de raidisseurs (36, 37) soudés à la plaque (6), formant grille en nid d'abeille, ladite virole étant soudée à la plaque (6), au droit de la couronne interne de la P.N.L, aux lames verti cales périphériques d'un premier réseau central de raidisseurs (36) ;

- un caisson annulaire (5) soudé à la virole de la cuve (7) et à la plaque (6) directement et par l'intermédiaire d'un second réseau annulaire de raidisseurs (37), formant ainsi avec la cuve (7) et la plaque (6) un ensemble d'une seule pièce très rigide, le caisson (5) qui est supporté par une virole cylindrique (4) fixée à la cuve de confinement (1) recevant le métal liquide basse pression par l'intermédiaire d'un système déprimogène (13) en communication avec le métal liquide haute pression de la cuve (7), et le distribuant aux assemblages de la P.N.L à travers les orifices (33) de la plaque (6).

2. Dispositif de supportage selon la revendication 1, caractérisé en ce que le système déprimogène (13) est placé sur la virole séparant la cuve haute pression (7) du caisson annulaire (5).

3. Dispositif de supportage selon la revendication 1, caractérisé en ce que le système déprimogène (13) est placé sur la liaison glissante reliant la tuyauterie de pompe (17) et la virole de la cuve haute pression (7).

4. Dispositif de supportage selon la revendication 1, caractérisé en ce que le système déprimogène (13) est placé sur des assemblages spéciaux (12) remplaçant certains assemblages manutentionnables à distance.

5. Dispositif de supportage selon l'une quelconque des revendications 1 à 4 précédentes, caractérisé en ce que la tuyauterie de pompe primaire (17) est soudée à la virole conique du caisson annulaire (5) au niveau de la traversée de celle-ci et montée coulissante sur la virole de la cuve haute pression (7).

6. Dispositif de supportage selon l'une quelconque des revendications 1 à 4 précédentes, caractérisé en ce que la tuyauterie de pompe primaire (17) est soudée à la virole de la cuve haute pression (7) et montée coulissante par un système à soufflet (22) lors de sa traversée de la virole conique du caisson annulaire (5), ladite tubulure (17) étant alors supportée par deux patins latéraux rigides (23) solidaires d'une assise (24) liée à la plaque supérieure (6).

## Patentansprüche

1. Trag- und Kühlmittelzuführvorrichtung für einen durch Flüssigmetall gekühlten Kernreaktorkern (14) mit den Kernbrennelementen (9) und den Elementen (11) für den seitlichen Neutronenschutz (P.N.L.) in einem mit Flüssigmetall gefüllten Einschließungsbehälter (1), deren Füße (31) auf männliche Tragstücke (41) gesteckt sind, die auf der oberen Seite einer Platte (6) Zuführöffnungen (33) für das Flüssigmetall gegenüberliegend befestigt sind, welche in der Platte (6) durchbrochen sind, sowie Primärpumpen (2) und Wärmetauschern (3), die in dem Behälter (1) integriert sind und das Unterdrucksetzen, das Umströmen und die Kühlung dieses Flüssigmetalls ermöglichen, einem Zuführbehälter (7) für Flüssigmentall unter hohem Druck, der sich unter der Platte (6) befindet und von einem Korbbogenboden und einem an der Platte (6) angeschueißten, zylindrischen Matel gebildet ist, wobei dieser Behälter das Flüssigmetall unter hohem Druck von Auslaßleitungen (17) der Primärpumpen erhält, die den zylindrischen Mantel durchqueren und es durch die Öffnungen (33) der Platte (6) hindurch zu dem Kernbrennelementen (9) verteilen, dadurch gekennzeichnet, daß sie unterhalb der. Platte (6) umfaßt:

- zwei an der Platte (6) angeschweißte Aussteifungsnetze (36, 37), die ein Bienenwabengitter bilden, wobei der genannte Mantel an der Platte (6) an der Stelle des Innenkranzes des P.N.L. mit senkrechten, dünnen Umfangsplatten eines ersten, mittleren Aussteifungsnetzes (36) angeschueißt ist;
- einen ringförmigen Kasten (5), der an dem Mantel des Behälters (7) und der Platte (6) unmittelbar und mittels eines zweiten, ringförmigen Versteifungsnetzes (37) angeschweißt ist und somit mit dem Behälter (7) und der Platte (6) eine sehr steife, einstückige Gesamtheit bildet, wobei der Kasten (5), der von einem an dem Einschließungsbehälter (1) befestigten, zylindrischen Mantel (4) abgestützt ist, Niederdruck-Flüssigmetall über ein mit dem Hochdruck-Flüssigmetall des Behälters (7) in Verbindung stehenden Druckverringerungs system (13) erhält und es durch die Öffnungen (33) der Platte (6) hindurch zu den Elementen des P.N.L. verteilt.

2. Tragvorrichtung nach Anspruch 1, _dadurch gekennzeichnet,_ daß das Druckverringerungssystem (13) an dem Mantel angeordnet ist, der den Hochdruckbehälter (7) von dem ringförmigen Kasten (5) trennt.

3. Tragvorrichtung nach Anspruch 1, _dadurch gekennzeichnet,_ daß das Druckverringerungssystem (13) an der verschiebbaren Verbindung angeordnet ist, die die Leitung (17) der Pumpe und den Mantel des Hochdruckbehälters (7) verbindet.

4. Tragvorrichtung nach Anspruch 1, _dadurch gekennzeichnet,_ daß das Druckverringerungssystem (13) an speziellen Brennelementen (12) angeordnet ist, die einige ferntransportierbare Brennelemente ersetzen.

5. Tragvorrichtung nach irgendeinem der vorhergehenden Ansprüche 1 bis 4, _dadurch gekennzeichnet,_ daß die Leitung (17) der Primärpumpe an den konischen Mantel des ringförmigen Kastens (5) auf der Höhe von der Durchquerung angeschweißt und an dem Mantel des Hochdruckbehälters (7) verschiebbar angebracht ist.

6. Tragvorrichtung nach irgendeinem der vorhergehenden Ansprüche 1 bis 4, _dadurch gekennzeichnet,_ daß die Leitung (17) der Primärpumpe an den Mantel des Hochdruckbehälters (7) angeschweißt und mit einem Balgensystem (22) bei ihrer Durchquerung des konischen Mantels des ringförmigen Kastens (5) verschiebbar angebracht ist, die genannte Leitung (17) dann von zwei seitlichen, steifen Tragsegmenten (23) gehalten ist, die einstückig mit einer Grundplatte (24) sind, welche mit der oberen Platte (6) verbunden ist.

## Claims

1. An apparatus for the support and supply of coolant to a liquid metal-cooled nuclear reactor core (14), comprising in a liquid metal-filled confinement vessel (1), the assemblies (9) of the core and the lateral neutron protection (LNP) assemblies (11), whose bases (31) are fitted onto male carrying members (41) fixed to the upper face of a plate (6) facing the liquid metal supply openings (33) made in the plate (6), as well as primary pumps (2) and exchangers (3) integrated into the vessel (1) and permitting the pressurization, circulation and cooling of said liquid metal, a supply vessel (7) for the high pressure liquid metal located beneath the plate (6) and constituted by a basket handle cover and by a cylindrical ferrule welded to the plate (6), said vessel receiving the high pressure liquid metal from the discharge pipes (17) of the primary pumps, which traverse the cylindrical ferrule, and distribute the same to the core assemblies (9) through the openings (33) in laid plate (6) is characterized in that it comprises, below the plate (6), two systems of stiffeners (36, 37) welded to the plate (6) and forming a honeycomb grid welded to the plate (6) to the right of the LNP and to the peripheral vertical blades of a first central system of stiffeners (36) and an annular caisson or box (5) welded to the vessel (7) ferrule and to the plate (6) in a direct manner and via a second annular system of stiffeners (37), thus forming with the vessel (7) and the plate (6) a very rapid one-piece assembly, whereby the box (5) which is supported by a cylindrical ferrule (4) fixed to the confinement vessel (1) receives the low pressure liquid metal via a pressure reduction system (13) linked with the high pressure liquid metal of the vessel (7) and distributes it to the LNP assemblies through the plate (6) openings (33).

2. Support apparatus according to claim 1, characterized in that the pressure reduction system (13) is placed on the ferrule separating tie high pressure vessel (7) from the annular box (5).

3. Support apparatus according to claim 1, characterized in that the pressure reduction system (13) is placed on the sliding connection connecting the pump pipe (17) and the ferrule of the high pressure vessel (7).

4. Support apparatus according to claim 1, characterized in that the pressure reduction system (13) is placed on special assemblies (12) replacing certain remotely handlable assemblies.

5. Support apparatus according to any one of the claims 1 to 4, characterized in that the primary pump pipe (17) is welded to the conical ferrule of the annular box (5) at the passage thereof and mounted in sliding manner on the ferrule of the high pressure vessel (7).

6. Support apparatus according to any one of the claims 1 to 4, characterized in that the primary pump (17) is welded to the ferrule of the high pressure vessel (7) and is slidingly mounted by a bellows system (22) during its passage through the conical ferrule of the annular box (5), said pipe (17) then being supported by two rigid lateral blocks (23) integral with a seat (24) connected to the upper plate (6).

FIG. 1

0 150 151

FIG. 2

FIG. 3

FIG. 4

FIG.5

FIG.6